Europäisches Patentamt

European Patent Office

Office européen des brevets

(19)

(11) Veröffentlichungsnummer: **0 047 829**
**B1**

(12) **EUROPÄISCHE PATENTSCHRIFT**

(45) Veröffentlichungstag der Patentschrift:
02.10.85

(51) Int. Cl.⁴: **F 16 B 17/00**

(21) Anmeldenummer: 81105423.8

(22) Anmeldetag: 11.07.81

(54) Befestigungselement für die Befestigung von Gegenständen an Hohlkammerplatten.

(30) Priorität: 11.09.80 DE 3034129
23.10.80 DE 3039917
08.11.80 DE 3042282

(43) Veröffentlichungstag der Anmeldung:
24.03.82 Patentblatt 82/12

(45) Bekanntmachung des Hinweises auf die Patenterteilung:
02.10.85 Patentblatt 85/40

(84) Benannte Vertragsstaaten:
AT BE CH FR GB IT LI NL SE

(56) Entgegenhaltungen:
DE - B - 2 010 906
DE - B - 2 602 000
DE - C - 910 133
FR - A - 2 026 309
FR - A - 2 209 418
US - A - 2 042 179
US - A - 2 454 681
US - A - 3 252 678
US - A - 3 463 524
US - A - 3 762 116

(73) Patentinhaber: artur fischer forschung,
Weinhalde 14 - 18, D-7244 Waldachtal 3 (Tumlingen) (DE)

(72) Erfinder: Fischer, Artur, Dr. h.c., Weinhalde 34,
D-7244 Waldachtal 3/Tumlingen (DE)

## Beschreibung

Die Erfindung betrifft ein Befestigungselement für aus Ober- und Untergurtplatten sowie Kammern bildenden Stegen bestehenden Hohlkammerplatten, das ein in eine Durchbrechung einer Gurtplatte einhängbares und sich an der Innenseite der Gurtplatte in der Kammer abstützendes Hakenteil aufweist, an dessen einen Ende ein Anschlußteil in einem vorzugsweise rechten Winkel zum Hakenteil angeordnet ist.

Derartige, bspw. aus Polykarbonat, Polypropylen oder ähnlichen Kunststoffen bestehende Hohlkammerplatten werden in transparenter Ausführung hauptsächlich für den Bau von Gewächshäusern verwendet. Für die Abhängung von Rohrleitungen und Befestigung anderer Gegenstände ist es notwendig, an diese Hohlkammerplatten Befestigungselemente anzubringen. Zur Vermeidung von undichten Stellen darf dabei die Außenhaut der Hohlkammerplatte nicht beschädigt werden. Da einerseits die Gurte und Stege der Hohlkammerplatten sehr dünnwandig sind und andererseits die Kammerhöhe sehr gering ist, sind dübelartige Befestigungselemente ungeeignet.

Aus der DE-A-2 010 906 ist ein Befestigungselement bekannt, dessen Hakenteil in einen Durchbruch derart einhängbar ist, daß eine Abstützung an der Innenseite der Gurtplatte erfolgt. Das Hakenteil weist jedoch eine zu geringe Abstützfläche auf, so daß der Einsatz dieses Befestigungselementes in Hohlkammerplatten der obengenannten Art schon bei geringen Lasten zu einem Ausreißen des Befestigungselementes führen würde.

Der Erfindung liegt daher die Aufgabe zugrunde, für Hohlkammerplatten der eingangs beschriebenen Art ein Befestigungselement mit hoher Ausreißfestigkeit zu schaffen.

Erfindungsgemäß wird dies dadurch erreicht, daß das Hakenteil mehrere, dem Kammerabstand entsprechend nebeneinander angeordnete und über das Anschlußteil verbundene Tragbalken aufweist, die in nebeneinanderliegende Kammern der Hohlkammerplatte einschiebbar sind.

Durch die Anordnung von mehreren großflächig an der Innenseite der Gurtplatte anliegenden Tragbalken können hohe, an dem Befestigungselement angreifende Zug- und Gewichtslasten aufgenommen werden. Die Breite der Tragbalken ist etwas geringer als die Kammerbreite, so daß ein Einschieben ohne Beschädigung der Stege möglich ist.

In einer weiteren Ausgestaltung der Erfindung kann die Oberseite des Tragbalkens zu seinem dem Anschlußteil gegenüberliegenden Ende hin abgeschrägt sein. Diese Abschrägung erleichtert das Einführen des Tragbalkens.

In einer weiteren Ergänzung der Erfindung kann das Anschlußteil mit zwei im Abstand zueinander angeordneten Durchbrechungen versehen sein, in die ein U-förmiges Halteteil mit seinen beiden an einem Ende über einen Steg verbundenen freien Schenkel einschieb- und in Endstellung arretierbar ist.

Nach Herstellung der Bohrungen für die Tragbalken wird das Befestigungselement in die Kammern der Hohlkammerplatte eingehängt. Zum Einhängen werden die Tragbalken zunächst mit ihrer Längsachse zur Bohrung fluchtend angesetzt und danach durch eine kreisähnliche Bewegung eingeschoben. Die zweiteilige Ausführung des Befestigungselementes ermöglicht auch dann ein Einhängen in die Hohlkammerplatten, wenn die Schenkel des Halteteils parallel zu den Tragbalken verlaufen und länger sind als diese. Das Halteteil wird nach dem Einhängen durch die Durchbrechungen im Anschlußteil des Befestigungselementes so weit durchgesteckt, bis der die beiden Schenkel verbindende Steg an der Außenfläche des Anschlußteiles anliegt. Diese Endstellung wird durch entsprechende Maßnahmen arretiert. Der Abstand der beiden Schenkel des Halteteiles ist so gewählt, daß nunmehr die Hohlkammerplatte über die Querstrebe der Unterkonstruktion eingehängt werden kann. Durch die Abstimmung der Länge der Schenkel auf die Breite der Querstreben ist das Befestigungselement in der Lage, auch große Wärmedehnungen der Hohlkammerplatte auszugleichen, ohne außer Eingriff zu kommen.

Das erfindungsgemäße Befestigungselement erlaubt auch dann die Befestigung der Hohlkammerplatten an eine Unterkonstruktion, wenn von der Innenseite her keine Zugriffsmöglichkeit zu den Querstreben besteht. Ein derartiger Anwendungsfall liegt dann vor, wenn die Hohlkammerplatten als Wärmedämmung an bereits mit Glas verscheibten Gewächshäusern angebracht werden sollen.

In einer weiteren Ergänzung der Erfindung können entlang den Durchbrüchen Rippen angeordnet sein, die an den Außen- und/oder Innenseiten der Schenkel des Halteteils anliegen. Durch diese Rippen wird das Halteteil zusätzlich abgestützt, so daß höhere, auf die Hohlkammerplatten wirkende Winddruck- und Sogkräfte aufgenommen werden können.

Schließlich können in einer weiteren Ergänzung der Erfindung an dem Halteteil ein oder mehrere Rastvorsprünge angeordnet sein, die nach dem Einschieben des Halteteils in die Endstellung an der Unterseite des Anschlußteiles bzw. an der Unterkante der Rippe einrasten.

In einer Ausgestaltung der Erfindung kann das Anschlußteil mit die Bohrung in der Untergurtplatte in Längsrichtung der Tragbalken überragenden Anschlagflächen versehen sein, deren Abstand von der Auflagefläche der Tragbalken der Dicke der Gurtplatte entspricht.

Durch die in Längsrichtung die Bohrung in der Untergurtplatte überragenden Anschlagflächen am Anschlußteil wird die Untergurtplatte zwischen der Auflagefläche der Tragbalken und den Anschlagflächen eingeklemmt bzw. abgestützt. Über diese Anschlagflächen werden die auf das Befestigungselement wirkenden Druckkräfte bzw. Momente und über die Auflagefläche der Tragbalken die Zugkräfte aufgenommen.

Schließlich kann in einer weiteren Ergänzung der Erfindung die zwischen dem Tragbalken und den Anschlagflächen des Anschlußteiles liegende Verbindungsstelle einen kreisförmigen Querschnitt aufweisen. Diese Gestaltung dient zur besseren Abstützung des Befestigungselementes in Längsrichtung der Kammern.

In der Zeichnung sind Ausführungsbeispiele der Erfindung dargestellt. Es zeigt

Fig. 1 das in eine Hohlkammerplatte eingesetzte Befestigungselement mit noch nicht eingeschobenem Halteteil,

Fig. 2 das über die Querstrebe der Unterkonstruktion eingehängte Befestigungselement,

Fig. 3 das in eine Hohlkammerplatte eingesetzte Befestigungselement in perspektivischer Ansicht,

Fig. 4 das Befestigungselement mit einem U-förmigen Halteteil zur Befestigung der Hohlkammerplatte an eine Unterkonstruktion.

Die bspw. aus Polykarbonat hergestellte Hohlkammerplatte 1 besteht aus einer Ober- und Untergurtplatte, die über längsverlaufende Stege 2 miteinander verbunden sind. Mit derartigen Platten sind frei tragende oder durch Unterkonstruktion abgestützte Gewächshäuser herstellbar.

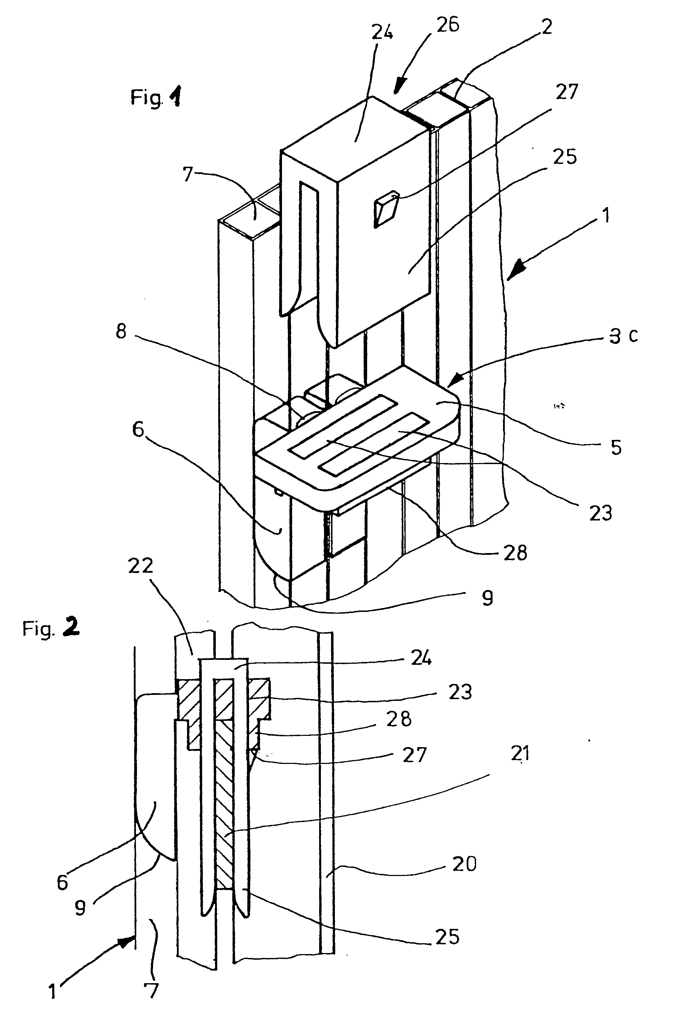

Das Befestigungselement 3c nach Fig. 1/2 dient zur Befestigung der Hohlkammerplatte 1 an eine Unterkonstruktion, die durch Winkelstützen 20 einerseits und Querstreben 21 andererseits gebildet ist. Ferner können die Hohlkammerplatten durch auf den Querstreben 21 angeordnete Abstandsleisten 22 abgestützt werden.

Nach dem Einhängen der Tragbalken 6 werden in die beiden parallel verlaufenden Durchbrüche 23 des rechtwinklig zu den Tragbalken stehenden Anschlußteiles 5 die über einen Steg 24 verbundenen Schenkel 25 des Halteteils 26 so weit hindurchgeschoben, bis der Steg 24 des Halteteils an der Oberseite des Anschlußteiles 5 zur Anlage kommt. Diese Endstellung wird durch den Rastvorsprung 27 am Halteteil, der an der Unterkante der Rippe 28 einrastet, arretiert. Zur zusätzlichen Abstützung des Halteteiles 26 und damit zur besseren Aufnahme der an den Hohlkammerplatten angreifenden Winddruck- und Sogkräfte sind entlang den Durchbrüchen 23 Rippen 28 angeordnet, die an den Außenseiten der Schenkel des Halteteiles anliegen.

Die Länge der Schenkel 25 ist so gewählt, daß diese die Querstrebe 21 auch bei einer Längsbewegung der Hohlkammerplatte 1 infolge Wärmedehnung noch erfassen.

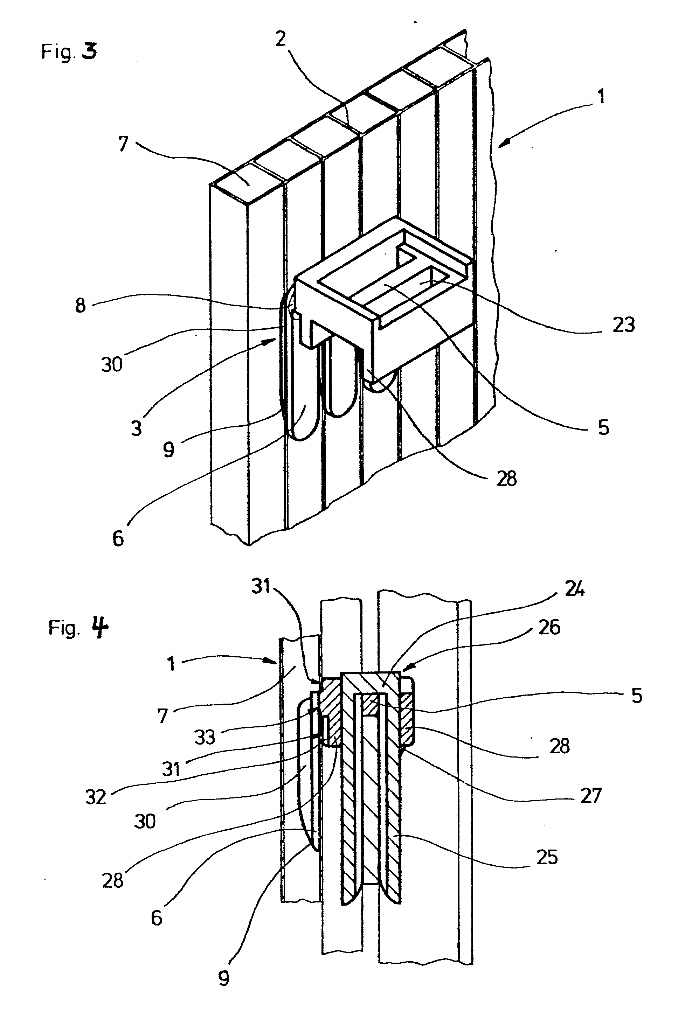

Bei dem Befestigungselement 3 nach Fig. 3 und 4 sind die dünner ausgeführten Tragbalken 6 mit Versteifungsrippen 30 versehen. Zum leichteren Einschieben der Tragbalken weist die Versteifungsrippe 30 des Tragbalkens eine Abschrägung 9 auf. Die Gesamthöhe des Tragbalkens ist zum leichteren Einschieben geringer als die Kammerhöhe. Zur Aufnahme von Druckkräften bzw. von Momenten ist das Anschlußteil 5 mit die Bohrung 8 in der Gurtplatte in Längsrichtung überragenden Anschlagflächen 31 versehen, die bspw. durch die Stirnseiten von am Anschlußteil 5 angeordneten Rippen 32 gebildet sind. Zwischen diesen Anschlagflächen 31 einerseits und der Auflagefläche der Tragbalken 6 andererseits ist die Untergurtplatte eingeklemmt. Um das Einführen des Befestigungselementes zu erleichtern, sind die Anschlagflächen 31 zur Stirnseite hin abgerundet. Um eine bessere Abstützung in Längsrichtung der Kammern 7 zu erreichen, weist die Verbindungsstelle 33 zwischen Tragbalken 6 und Anschlußteil 5 einen kreisförmigen Querschnitt auf.

## Patentansprüche

1. Befestigungselement (3, 3c) für aus Ober- und Untergurtplatten sowie Kammern bildenden Stegen (2) bestehenden Hohlkammerplatten (1), das ein in eine Durchbrechung (8) einer Gurtplatte einhängbares und sich an der Innenseite der Gurtplatte in der Kammer abstützendes Hakenteil aufweist, an dessen einen Ende ein Anschlußteil (5) in einem vorzugsweise rechten Winkel zum Hakenteil angeordnet ist, dadurch gekennzeichnet, daß das Hakenteil mehrere, dem Kammerabstand entsprechend nebeneinander angeordnete und über das Anschlußteil (5) verbundene Tragbalken (6) aufweist, die in nebeneinanderliegende Kammern der Hohlkammerplatte (1) einschiebbar sind.

2. Befestigungselement nach Anspruch 1, dadurch gekennzeichnet, daß die Oberseite des Tragbalkens (6) zu seinem dem Anschlußteil (5) gegenüberliegenden Ende hin abgeschrägt ist.

3. Befestigungselement nach Anspruch 1, dadurch gekennzeichnet, daß das Anschlußteil (5) mit zwei im Abstand zueinander angeordneten Durchbrechungen (23) versehen ist, in die ein U-förmiges Halteteil (26) mit seinen beiden an einem Ende über einen Steg (24) verbundenen freien Schenkel (25) einschieb- und in Endstellung arretierbar ist.

4. Befestigungselement nach Anspruch 3, dadurch gekennzeichnet, daß entlang den Durchbrüchen (23) Rippen (28) angeordnet sind, die an den Außen- und/oder Innenseiten der Schenkel (25) des Halteteils (26) anliegen.

5. Befestigungselement nach Anspruch 3, dadurch gekennzeichnet, daß an dem Halteteil (26) ein oder mehrere Rastvorsprünge (27) angeordnet sind, die nach dem Einschieben des Halteteils in die Endstellung an der Unterseite des Anschlußteiles (5) bzw. an der Unterkante der Rippe (28) einrasten.

6. Befestigungselement nach Anspruch 1, dadurch gekennzeichnet, daß das Anschlußteil (5) mit die Bohrung (8) in der Untergurtplatte in Längsrichtung der Tragbalken (6) überragenden Anschlagflächen (31) versehen ist, deren Abstand von der Auflagefläche der Tragbalken der Dicke der Gurtplatte entspricht.

7. Befestigungselement nach Anspruch 6, dadurch gekennzeichnet, daß die zwischen dem Tragbalken (6) und den Anschlagflächen (31) des Anschlußteiles (5) liegende Verbindungsstelle (33) einen kreisförmigen Querschnitt aufweist.

## Claims

1. Fastening element (3, 3c) for panels (1) of hollow construction comprising upper and lower cover plates and cross-pieces (2) forming chambers, which element comprises a hook member which can be mounted in an opening (8) in a cover plate and be supported against the inner side of the cover plate in a chamber, a connection member (5) being arranged at one end of the hook member, preferably at right-angles thereto, characterised in that the hook member has several support arms (6) which are arranged next to one another in correspondance with the spacing of the chambers and are connected by means of the connection member (5), it being possible to insert the support arms into neighbouring chambers of the hollow panel (1).

2. Fastening element according to claim 1, characterised in that the upper side of each support arm (6) slopes towards its end remote from the connection member (5).

3. Fastening element according to claim 1, characterised in that the connection member (5) is provided with two openings (23) which are spaced apart from one another and into which a U-shaped retaining member (26) can be inserted and held in an assembled position by means of its two free limbs (25) which are connected at one of their ends by means of a cross-piece (24).

4. Fastening element according to claim 3, characterised in that alongside the openings (23) there are arranged ribs (28) which rest against the outer and/or inner side of the limbs (25) of the retaining member (26).

5. Fastening element according to claim 3, characterised in that on the retaining member (26) there are arranged one or more locking projections (27) which lock against the underside of the connection member (5) and/or against the lower edge of the rib (28) after the retaining member has been brought into the assembled position.

6. Fastening element according to claim 1, characterised in that the connection member (5) is provided with contact surfaces (31) which project beyond the opening (8) in the lower cover plate in the lengthwise direction of the support arms (6) and of which the spacing from the contact surface of the support arms corresponds to the thickness of the cover plate.

7. Fastening element according to claim 6, characterised in that the connection zone (33) lying between the support arm (6) and the contact surfaces (31) of the connection member (5) is of circular cross-section.

## Revendications

1. Elément de fixation (3, 3c) pour plaques alvéolaires (1) comprenant des plaques de membrure supérieure et des plaques de membrure inférieure ainsi que des nervures (2) délimitant des compartiments ou chambres, ledit élément présentant une partie crochue qui peut être suspendue dans un perçage traversant (8) d'une plaque de membrure, prend appui dans la chambre contre la face interne de cette plaque de membrure et à l'une des extrémités de laquelle une pièce de raccordement (5) est disposée de préférence à angle droit par rapport à cette partie crochue, élément caractérisé par le fait que ladite partie crochue possède plusieurs entretoises de support (6) qui, disposées en juxtaposition à une distance correspondant à l'espacement entre les chambres et reliées par l'intermédiaire de la pièce de raccordement (5), peuvent être insérées dans des chambres juxtaposées de la plaque alvéolaire (1).

2. Elément de fixation selon la revendication 1, caractérisé par le fait que la face supérieure de l'entretoise de support (6) est biseautée en direction de son extrémité opposée à la pièce de raccordement (5).

3. Elément de fixation selon la revendication 1, caractérisé par le fait que la pièce de raccordement (5) est pourvue de deux évidements (23) disposés à distance l'un de l'autre, dans lesquels une pièce de retenue (26) configurée en U peut être introduite, et verrouillée dans sa position extrême, par ses deux branches libres (25) reliées à une extrémité par l'intermédiaire d'une base (24).

4. Elément de fixation selon la revendication 3, caractérisé par le fait que, le long des évidements (23), sont disposées des nervures (28) qui portent contre les faces externes et/ou internes des branches (25) de la pièce de retenue (26).

5. Elément de fixation selon la revendication 3, caractérisé par le fait qu'une ou plusieurs saillies encliquetables (27) sont disposées sur la pièce de retenue (26), saillies qui, après l'insertion de ladite pièce de retenue jusqu'à sa position extrême, s'encliquettent respectivement contre la face inférieure de la pièce de raccordement (5) ou contre l'arête inférieure de la nervure (28).

6. Elément de fixation selon la revendication 1, caractérisé par le fait que la pièce de raccordement (5) est dotée de surfaces de butée (31) qui dépassent dans le sens longitudinal des entretoises de support (6) au-delà du perçage (8) pratiqué dans la plaque de membrure inférieure, ces surfaces étant espacées, de la surface d'appui de entretoises de support, d'une distance correspondant à l'épaisseur de la plaque de membrure.

7. Elément de fixation selon la revendication 6, caractérisé par le fait que la zone de liaison (33) intercalée entre les entretoises de support (6) et les surfaces de butée (31) de la pièce de raccordement (5) possède une section circulaire.

Fig. 1

Fig. 2

Fig. 3

Fig. 4

7